# NEW EUROPEAN PATENT SPECIFICATION

(11) **EP 2 945 205 B2**
(45) Date of publication and mention of the opposition decision: **27.04.2022**
(45) Mention of the grant of the patent: 18.10.2017
(21) Application number: 15167215.1
(22) Date of filing: 11.05.2015
(51) Int. Cl.: H01M 2/10, H01M 10/623, H01M 10/613, A47L 9/28

(54) **VACUUM CLEANER**
STAUBSAUGER
ASPIRATEUR

(30) Priority: 12.05.2014 KR 20140056613
(43) Date of publication of application: 18.11.2015
(73) Proprietor: LG Electronics Inc., Yeongdeungpo-gu Seoul 150-721 (KR)
(72) Inventor: Lee, Changhoon, Seoul 153-802 (KR); Lim, Hwajin, Seoul 153-802 (KR); Ha, Gunho, Seoul 153-802 (KR)
(74) Representative: Morrall, Jonathan Ian McLachlan

(56) References cited:
- EP-B1- 0 940 864
- EP-B1- 1 548 859
- EP-B1- 2 269 263
- WO-A1-00/36969
- US-A1- 2009 061 302
- US-A1- 2013 207 615

## Description

### BACKGROUND

The present disclosure relates to a vacuum cleaner.

In general, vacuum cleaners are devices that suction air containing dusts by using a suction force generated by a suction motor mounted in a main body to filter the dusts in the main body.

Vacuum cleaners are classified into manual cleaners and automatic cleaners. The manual cleaners are cleaners that are used for directly performing cleaning by a user, and the automatic cleaners that travel by oneself to perform cleaning.

The manual cleaners may be classified into a canister type cleaner in which a suction nozzle is provided separately with respect to a main body and connected to the main body by using a connection tube and an upright type cleaner in which a suction nozzle is coupled to a main body.

A power cord outlet of a cleaner is disclosed in Korean Patent Publication No. 10-2006-0118796 (Published Date: November 24, 2006).

According to the prior document, since a cord reel assembly is provided in a main body, and a power cord is connected to a socket, the main body may receive a power.

In the prior document, since a cleaner receives a power through the cord reel assembly, the cleaner may move by only a distance corresponding to a length of the cord wound around the cord reel assembly when the cleaner performs cleaning.

WO2000/36969A1 concerns a vacuum cleaner which comprises a cleaner body and a battery assembly arranged to supply power to a suction motor. The battery assembly comprises a plurality of battery cells and a support device supporting the plurality of battery cells so that battery cells are spaced apart from each other.

### SUMMARY

Aspects of an invention are defined in the appended independent claims.

Embodiments provide a vacuum cleaner.

In one embodiment, a vacuum cleaner includes: a cleaner body including a suction motor for generating a suction force; a suction part communicating with the cleaner body to suction air and dusts; and a battery assembly disposed on the cleaner body or the suction part to supply a power to the suction motor, wherein the battery assembly includes: a plurality of battery units, wherein each battery unit comprises a plurality of battery cells; and a plurality of support devices supporting the plurality of battery units, respectively, wherein the plurality of battery cells are supported by the support device so that the plurality of battery cells are spaced apart from each other.

The plurality of battery cells are disposed in parallel by the support devices and connected to each other in series.

In two adjacent cells of the plurality of battery cells, a direction of a first pole of one cell is opposite to that of a first pole of the other cell.

Each of the support devices comprises: a first support supporting one side of the plurality of battery cells; and a second support supporting the other side of the plurality of battery cells, wherein the first and second supports are spaced apart from each other in the state where the first and second supports support the plurality of battery cells.

Each of the supports may comprise a support body; a plurality of cell cover extending from the support body to surround a portion of each of the plurality of battery cells.

A plurality of conductors for connecting a first pole of one cell to a second pole of the other cell of the plurality of battery cells are disposed on each of the supports.

A plurality of holes in which the plurality of conductors are disposed are defined in the support body of each of the supports.

The vacuum cleaner may further comprise a battery management system for managing a voltage of each of the plurality of battery cells connected to the plurality of conductors.

The vacuum cleaner may further comprise a battery cover covering the plurality of battery cells, the support device, and the battery management system, wherein the battery management system is disposed on the battery cover.

The battery assembly comprises a plurality of battery units each of which comprises the plurality of battery cells, and the plurality of battery units are supported by the plurality of support devices, respectively.

The plurality of battery cells are disposed in a zigzag shape in the state where the plurality of battery cells are supported by the support devices.

The battery assembly may further comprise a battery cover covering the plurality of battery cells and the support devices, the suction motor may be accommodated in a motor housing, and a contact rib contacting an upper portion of the battery cover to press the battery cover may be disposed on the motor housing.

The battery assembly may further comprise a battery cover covering the plurality of battery cells and the support devices, a cover guide may be disposed on the battery cover, and a body guide contacting the cover guide to prevent the cover guide from moving is disposed on the cleaner body.

The vacuum cleaner may further comprise a plurality of wheels disposed on both sides of the cleaner body, wherein the suction motor may be disposed between the plurality of wheels, the battery assembly may be disposed between one wheel of the plurality of wheels and the suction motor, and the plurality of battery cells may be disposed so that a longitudinal direction of the plurality of battery cells is parallel to an extension direction of a shaft of the wheel.

The vacuum cleaner may further comprise a charger (140) disposed on the cleaner body to convert a received commercial power into a DC voltage and supply the converted DC voltage to the battery assembly.

The details of one or more embodiments are set forth in the accompanying drawings and the description below. Other features will be apparent from the description and drawings, and from the claims.

### BRIEF DESCRIPTION OF THE DRAWINGS

Fig. 1 is a perspective view of a vacuum cleaner according to an embodiment.
Fig. 2 is an exploded perspective view of a main body of the vacuum cleaner according to an embodiment.
Fig. 3 is a block diagram of the vacuum cleaner according to an embodiment.
Fig. 4 is a view illustrating a state in which a battery assembly is installed on a second body according to an embodiment.
Fig. 5 is a vertical cross-sectional view of the state of Fig. 4.
Fig. 6 is a view illustrating an arrangement relationship between a motor housing and the battery assembly according to an embodiment.
Fig. 7 is a perspective view of the battery assembly according to an embodiment.
Fig. 8 is a perspective view illustrating an assembly of a battery unit and a battery support.
Fig. 9 is a perspective view of the battery support according to an embodiment.
Fig. 10 is a view illustrating the assembly of the battery unit and the battery support of Fig. 8 when viewed in a direction A.
Fig. 11 is a view illustrating the assembly of the battery unit and the battery support of Fig. 8 when viewed in a direction B.
Fig. 12 is a view illustrating a state in which a charger is connected to a vacuum cleaner according to another embodiment.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the appended claims. To avoid detail not necessary to enable those skilled in the art to practice the invention, the description may omit certain information known to those skilled in the art. The following detailed description is, therefore, not to be taken in a limiting sense.

Also, in the description of embodiments, terms such as first, second, A, B, (a), (b) or the like may be used herein when describing components of the present invention. Each of these terminologies is not used to define an essence, order or sequence of a corresponding component but used merely to distinguish the corresponding component from other component(s). It should be noted that if it is described in the specification that one component is "connected," "coupled" or "joined" to another component, the former may be directly "connected," "coupled," and "joined" to the latter or "connected", "coupled", and "joined" to the latter via another component.

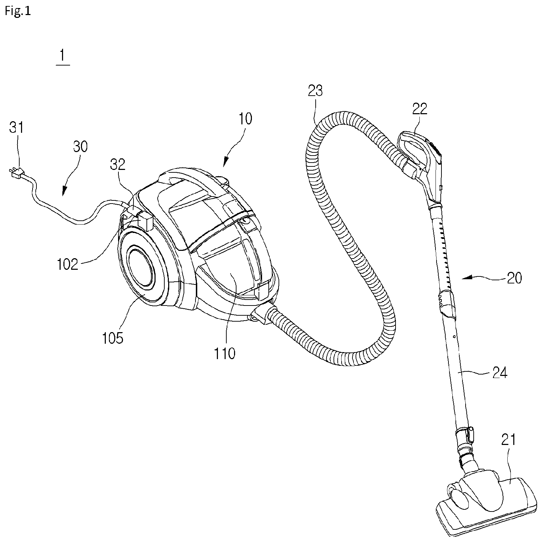

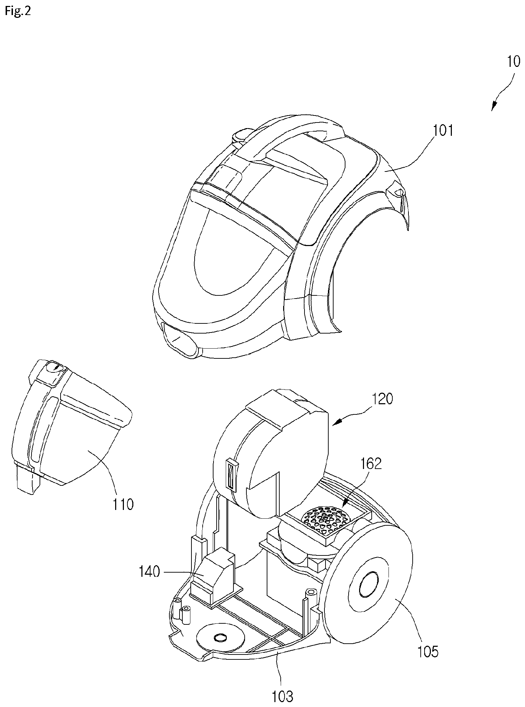

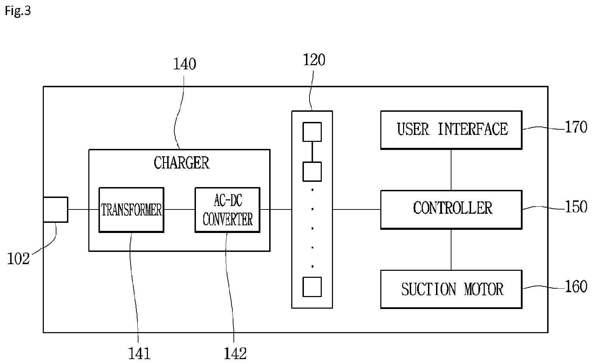

Fig. 1 is a perspective view of a vacuum cleaner according to an embodiment. Fig. 2 is an exploded perspective view of a main body of the vacuum cleaner according to an embodiment. Fig. 3 is a block diagram of the vacuum cleaner according to an embodiment.

Referring to Figs. 1 to 3, a vacuum cleaner 1 includes a cleaner body 10 having a suction motor 160 for generating a suction force and a suction device 20 for guiding air containing dusts to the cleaner body 10.

The suction device 20 includes a suction part 210 for suctioning dusts on a surface to be cleaned, e.g., a ground surface and may include connection parts 22, 23, and 24 for connecting the suction part 21 to the cleaner body 10.

The connection parts 22, 23, and 24 may include an extension tube 24 connected to the suction part 21, a handle 22 connected to the extension tube 24, and a suction hose 23 connecting the handle 22 to the cleaner body 10.

Also, the vacuum cleaner 1 may further include a dust separation part (not shown) for separating the suctioned air and dusts from the suction device 20 from each other and a dust container 110 for storing the dusts separated by the dust separation part. The dust container 110 may be separably mounted on the cleaner body 10. The dust separation part and the dust container 110 may be manufactured as separated items, or the dust separation part and the dust container 110 may be provided as one module.

The vacuum cleaner 1 includes a battery assembly 120 supplying power for operating the suction motor 160. The vacuum cleaner 1 may further include a charger 140 for charging the battery assembly 120, and a power cord 30 separably connected to the cleaner body 10 to supply commercial power to the cleaner body 120.

The power cord 30 may include a plug 31 connected to a socket and a first connector 32 connected to the cleaner body 10. Also, the cleaner body 10 may include a cleaner connector 102 to which the first connector is connected. The cleaner connector 102 may protrude from the cleaner body 10.

The cleaner body 10 may include a first body 101 and a second body 103 coupled to a lower portion of the first body 101. Wheels 105 may be coupled to both sides of the second body 103, respectively.

The suction motor 160, the battery assembly 120, and the charger 140 may be disposed on the second body 103. The suction motor 160 may be protected by a motor housing 162. That is, the suction motor 160 may be accommodated into the motor housing 162.

Here, for space efficiency, the battery assembly may be disposed at a side of the motor housing 162, i.e., at a side of the suction motor 160.

The suction motor 160 and the battery assembly 120 may be disposed between the plurality of wheels 105. Also, the battery assembly 120 may be disposed between one of the plurality of wheels 105 and the suction motor 160. Also, the charger 140 may be disposed spaced apart from the battery assembly 120. Alternatively, the battery assembly 120 may be disposed on the suction part 21. Or, the cleaner connector 102 may be disposed on the suction part 21. In this case, the cleaner connector 102 may protrude from the suction part 21.

The dust container 110 may be separably coupled to the first body 101. Also, the second connector 102 may be disposed on the first body 101.

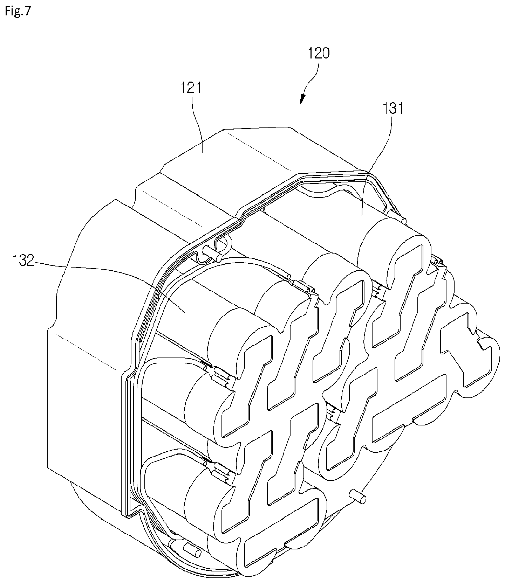

The battery assembly 120 may include one or more battery units (see reference numeral 131 and 132 of Fig. 7). The one or more battery units include a plurality of battery cell (hereinafter, referred to as a "cell" for convenience of description). That is, in the present disclosure, a group of the plurality of battery cells may be called a battery unit.

The plurality of cells may be a secondary battery that is chargeable or dischargeable. The maximum DC voltage (the sum of voltages of the plurality of cells) charged in the battery assembly 120 may exceed about 42.4 V. For example, the battery assembly 120 may have the maximum charging voltage of above about 84.8 V.

The charger 140 may perform rectification and smoothing operations to receive a commercial AC voltage, thereby converting the received AC voltage into a DC voltage. Also, the charger 140 may supply the converted DC voltage to the battery assembly 120. For example, the charger 140 may convert (boosting) the commercial AC voltage into a DC voltage of above about 42.4 V to supply the converted DC voltage to the battery assembly 120.

The charger 140 may include a transformer 141 for transforming the inputted AC voltage and an AC-DC converter 142 for converting the AC voltage outputted from the transformer 141 into a DC voltage. Here, the DC voltage outputted from the AC-DC converter 142 may exceed about 42.4 V.

For another example, the transformer may transform the DC voltage outputted from the AC-DC converter. In this case, the DC voltage outputted form the transformer 141 may exceed about 42.4 V.

For further another example, the charger 140 does not have the transformer, and the AC-DC converter 142 may include a circuit for preventing the DC voltage from being converted into the AC voltage. That is, the AC-DC converter 142 may be an insulation type converter. In the current embodiment, the AC-DC converter may be a well-known converter, and thus detailed description of the AC-DC converter will be omitted.

In the current embodiment, for example, the suction motor 160 may be a BLDC motor. Also, the suction motor 160 may have a maximum output, e.g., 600 W or more.

When the voltage charged in the battery assembly 120 is below about 42.4 V, a circuit that is required to drive the suction motor 160 has a complicated structure because current has to be at least above about 14.15 A to operate a high-power suction motor 160.

However, according to the current embodiment, since the maximum voltage charged in the battery assembly 120 is above about 84.8 V, the current required to operate the suction motor 160 may be less than about 7.1 A. Thus, the circuit that is required to drive the suction motor 160 may be simplified in structure.

According to the current embodiment, since the DC voltage of above about 42.4 V is outputted form the charger 140, and the battery assembly 120 has the maximum charging voltage of above about 84.8 V, the suction motor 160 may output high power. Thus, the vacuum cleaner 1 may increase in suction force to improve cleaning performance.

Also, the power cord 30 may be connected to the vacuum cleaner 1 when the battery units 131 and 132 are charged. When cleaning is performed by using the vacuum cleaner 1, the power cord 30 may be separated from the vacuum cleaner 1 and be used. Thus, the vacuum cleaner 1 may be improved in degree of mobility.

That is, since the vacuum cleaner 1 receives the power from the battery assembly 120 without having a cord reel, the vacuum cleaner 1 is not limited in movement distance. Also, the vacuum cleaner does not have to jump over the cord wound around the cord reel or move while clearing up the cord while the vacuum cleaner 1 moves, and thus the vacuum cleaner 1 may smoothly move.

Also, in the current embodiment, the battery assembly 120 is electrically connected to the cleaner connector 102, and the battery assembly 120 has the maximum charging voltage of above about 84.8 V. Thus, if there is no transformer 141, the user may be in danger when the user contacts the cleaner connector 102. However, in the current embodiment, since the charger 140 includes the transformer 141, the transformer 141 may perform an insulation function to improve user's safety.

The vacuum cleaner 1 may further include a user interface 170. The user interface 170 may receive an operation command of the vacuum cleaner 1 and display operation information or state information of the vacuum cleaner 1.

The user interface 170 may be disposed on at least one of the handle 22 and the cleaner body 10. The user interface 170 may be provided in a structure in which an input unit and a display unit are integrally disposed or include an input unit and a display unit that are separately provided. Power-on selection, a cleaning mode, intensities of a suction force of the vacuum cleaner 1 may be selected through the input unit. The display unit may display residual amount information of at least the battery assembly 120. When the battery residual amount of the battery assembly 120 reaches a reference value, the controller 150 may allow the display unit to display information for notifying that the battery assembly 120 has to be charged.

For another example, the display unit may continuously or gradually display the battery residual amount of the battery assembly 120. For example, the display unit may display the battery residual amount of the battery assembly 120 by a number, a symbol, or a graph. Or, the display unit may include a plurality of light emitting parts to display the battery residual amount of the battery assembly 120 by turning on the plurality of light emitting parts in different numbers. Or, the display unit may change a color of light irradiated from the light emitting part to display the battery residual amount of the battery assembly 120.

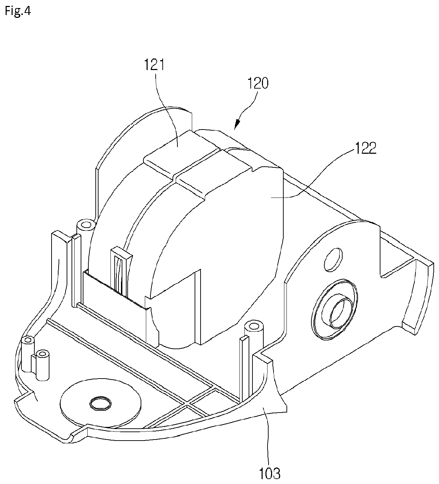

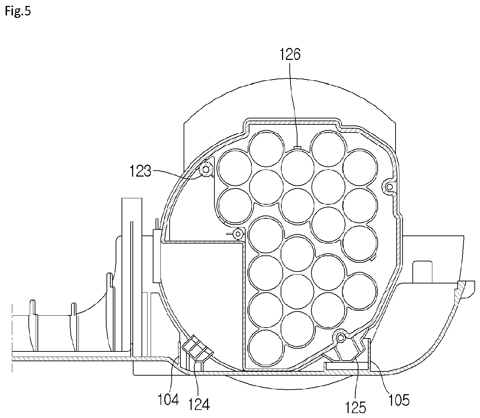

Fig. 4 is a view illustrating a state in which a battery assembly is installed on a second body according to an embodiment, and Fig. 5 is a vertical cross-sectional view of the state of Fig. 4.

Referring to Figs. 3 to 5, the battery assembly 120 may further include battery covers 121 and 122 for accommodating the plurality of battery cells.

The battery covers 121 and 122 may include a first battery cover 121 and a second battery cover 122 coupled to the first battery cover 121.

The battery covers 121 and 122 may be seated on the second body 103. Each of the battery covers 121 and 122 may have an approximately cylindrical shape. Since each of the battery covers 121 and 122 has an approximately cylindrical shape, a space in which the battery covers 121 and 122 take up in the cleaner body 10 may be minimized.

At least one of the first and second battery covers 121 and 122 may include at least one coupling boss 123 to which a coupling member is coupled.

In an example, a plurality of cover guides 124 and 125 that are spaced apart from each other in a forward-backward direction of the cleaner body 10 may be disposed on each of the battery covers 121 and 122. Also, a plurality of body guides 104 and 105 contacting the plurality of cover guides 124 and 125 may be disposed on the second body 103.

In a state where the plurality of cover guides 124 and 125 contact the plurality of body guides 104 and 105, movement of the battery covers 121 and 122 in the forward-backward direction of the cleaner body 10 may be minimized.

That is, the plurality of cover guides 124 and 124 may include a first cover guide 124 and a second cover guide 125 disposed at a rear side of the first cover guide 124.

The plurality of body guides 104 and 105 may include a first body guide 104 that is in contact with a front surface of the first cover guide 124 and a second body guide 105 that is in contact with a back surface of the second guide 125. That is, the first and second cover guides 124 and 125 may be disposed between the first body guide 104 and the second body guide 105.

For another example, the first cover guide 124 may be accommodated into the first body guide 104, and the second cover guide 125 may be accommodated into the second body guide 105.

Or, the cover guides 124 and 125 may be one ore more grooves, and the body guides 104 and 105 may be inserted into the one or more cover guides 124 and 125.

Although two cover guides are disposed on the battery cover in the foregoing examples, one cover guide may be disposed on the battery cover. Also, one body guide may be disposed on the second body.

In another example, the battery covers 121 and 122 may include a plurality of support ribs 126 for supporting a battery supporter that will be described later. The plurality of support ribs 126 may prevent the battery supporter from moving in the battery cover without a separate fixing unit. Of course, the battery supporter may be coupled to the battery cover by the coupling member.

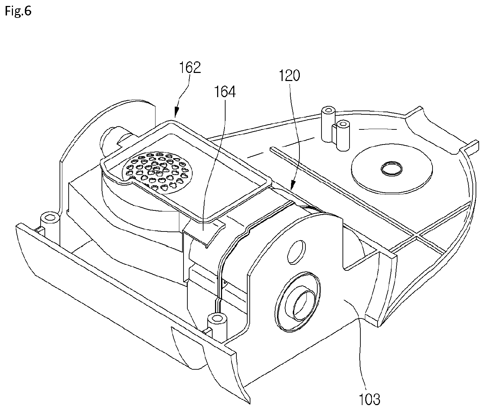

Fig. 6 is a view illustrating an arrangement relationship between the motor housing and the battery assembly according to an example.

Referring to Fig. 6, the motor housing 162 may include a contact rib 164 that contacts an upper portion of the battery assembly 120.

In a state where the battery assembly 120 is placed on the second body 103, the motor housing 162 may be coupled to the second body 103. Also, when the motor housing 162 is coupled to the second body 103, the contact rib 164 contacts the upper portion of the battery assembly 120. The contact rib 164 may press the battery assembly 120 downward in the state where the contact rib 164 is in contact with the upper portion of the battery assembly 120.

Since the contact rib 164 contacts the upper portion of the battery assembly 120, vertical movement of the battery assembly 120 may be prevented.

According to the above example, since the movement of the battery assembly 120 is prevented by the contact rib 164 of the motor housing 162 and the cover guide 124 and 125 and the body guide 104 and 105 of the battery cover 121 and 122, a separate fixing unit for fixing the battery assembly 120 to the second body 103 is unnecessary.

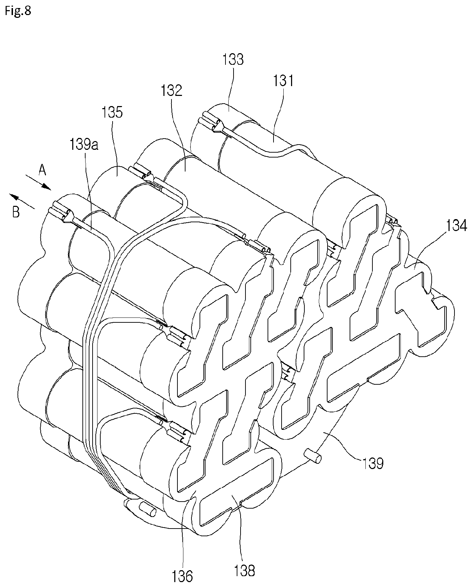

Fig. 7 is a perspective view of the battery assembly according to an embodiment, and Fig. 8 is a perspective view illustrating an assembly of a battery unit and a battery support. For convenience of comprehension, a state in which the second battery cover is removed is illustrated in Fig. 7.

Referring to Figs. 7 and 8, the battery assembly 120 may include one or more battery units 131 and 132 and a plurality of support devices for supporting the one or more battery units 131 and 132.

The one or more battery units 131 and 132 includes a first battery unit 131 and may include a second battery unit 132. The first battery unit 131 and the second battery unit 132 may be connected to each other in series.

Each of the first and second battery units 131 and 132 includes a plurality of cells. Also, the plurality of cells constituting the first battery unit 131 may be connected to each other in series, and the plurality of cells constituting the second battery unit 132 may also be connected to each other in series.

The plurality of battery support devices includes a first support device for supporting the first battery unit 131 and a second support device for supporting the second battery unit 132.

Each of the support devices may support the plurality of cells constituting each of the battery units 131 and 132 at the same time.

The first support device includes a first support 133 supporting one side of the plurality of cells of the first battery unit 131 and a second support 134 supporting the other side of the plurality of cells of the first battery unit 131. The first and second supports 133 and 134 may support the first battery unit 131 in a state where the first and second supports 133 and 134 are spaced apart from each other. Thus, heat generated when the first battery unit 131 is discharged may be emitted between the first and second supports 133 and 134.

The second support device may include a third support 135 supporting one side of the plurality of cells of the second battery unit 132 and a fourth support 136 supporting the other side of the plurality of cells of the second battery unit 132.

The third and fourth supports 135 and 136 may support the second battery unit 132 in a state where the third and fourth supports 135 and 136 are spaced apart from each other. Thus, heat generated when the second battery unit 132 is discharged may be emitted between the third and fourth supports 135 and 136.

Although the first and second supports 133 and 134 support ten cells constituting the first battery unit 131 at the same time, and the third and fourth supports 135 and 136 support twelve cells constituting the second battery unit 132 at the same time in Fig. 8, the present disclosure is not limited thereto. For example, the number of cells supported by each of the supports is not limited.

The plurality of cells of each of the battery units 131 and 132 may be disposed in a zigzag shape in the state where the cells are supported by the supports 133, 134, 135, and 136. That is, at least a portion of the other cell may be disposed on an area corresponding to an area between two cells. Since the plurality of cells are disposed in the zigzag shape in the current embodiment, a space that is occupied by the plurality of cells may be minimized.

A plurality of conductors 139 for connecting a positive pole (+) of one cell to a negative pole (-) of the other cell in two cells adjacent to each other may be coupled to each of the supports 133, 134, 135, and 136.

For example, the plurality of conductors 138 may be welded to each of the cells. However, the present disclosure is not limited to the coupling method between the plurality of conductors 138 and each of the cells.

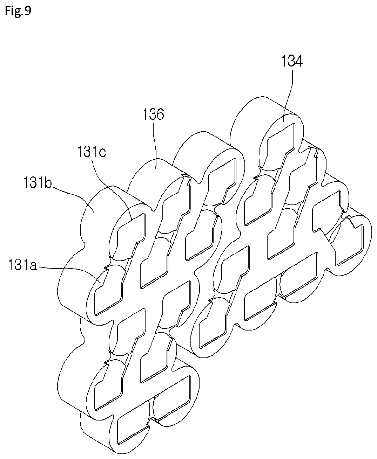

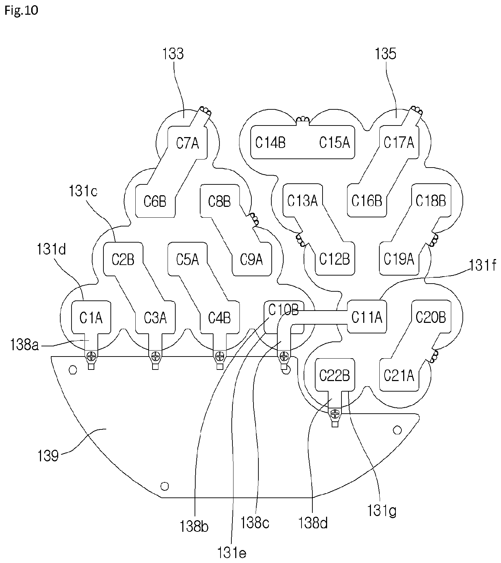

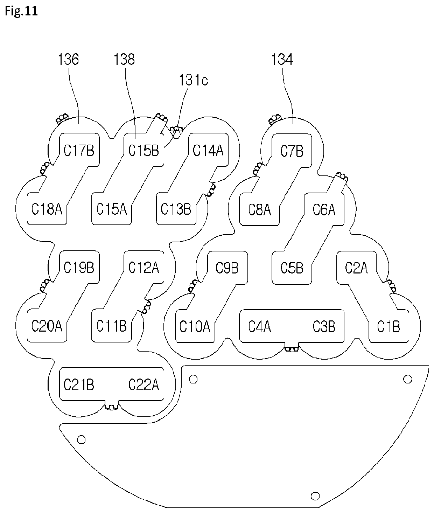

Fig. 9 is a perspective view of the battery support according to an embodiment, Fig. 10 is a view illustrating the assembly of the battery unit and the battery support of Fig. 8 when viewed in a direction A, and Fig. 11 is a view illustrating the assembly of the battery unit and the battery support of Fig. 8 when viewed in a direction B.

Fig. 9 illustrates, for example, the second support and the fourth support. Also, the first support has a shape corresponding to that of the second support, and the third support has a shape corresponding to that of the fourth support. However, a hole in which the conductor is disposed may have a different shape.

Referring to Figs. 9 to 11, the battery assembly may further include a battery management system (BMS) 139. The BMS 139 may manage the cells so that each of the cells is maintained at a predetermined voltage. That is, the BMS 139 may allow the battery 120 to emit the predetermined voltage.

Each of the plurality of conductors 138 is connected to the BMS 139 by an electric wire 139a.

Also, the BMS 139 may be installed on the battery covers 121 and 122.

Each of the supports 133, 134, 135, and 136 may include a support body 131a covering a side surface of each of the cells and a plurality of cell cover 131b extending from the support body 131a and provided in the same number as the cells.

The plurality of cell covers 131b surround a portion of each of the cells. At least two cells of the plurality of cells are spaced apart from each other by the plurality of cell covers 131b in the state where the plurality of cells are supported by each of the supports 133, 134, 135, and 136. Although not limited, all of the plurality of cells may be spaced apart from each other. Thus, since the plurality of cells are supported by each of the supports 133, 134, 135, and 136 in the state where the cells are spaced apart from each other, heat generated from the plurality of cells may be effectively emitted into spaces between the plurality of cells.

The plurality of cells may be spaced apart from each other in a direction that is perpendicular to a longitudinal direction of the cell. In this specification, the longitudinal direction of the cell may be a direction in which the positive pole (+) and the negative pole (-) are connected to each other. That is, the plurality of cells may be disposed parallel to each of the supports 133, 134, 135, and 136 and connected to each other in series. Thus, according to the current embodiment, the battery assembly 120 may be compact because the plurality of cells are disposed in parallel.

The battery assembly 120 may be disposed so that a longitudinal direction of the cells is parallel to an extension direction of a shaft of one wheel between the one wheel of the plurality of wheels and the suction motor.

Two cells, which are adjacent to each other, of the plurality of cells may be disposed so that a direction of a first pole (+ pole or - pole) one cell is opposite to that of a first pole (+ pole or - pole) of the other cell.

A hole 131c in which the conductor 128 is disposed may be defined in the support body 131a of each of the supports 133, 134, 135, and 136. Two holes 131d and 131e in addition to the number of hole 131c corresponding to 1/2 of the number of cells installed on the first support 133 may be defined in the first support 133.

If the number of cells installed on the third support 133 is defined as m, two holes 131f and 131g in addition to (1/2 * m) - 1 holes 131c may be defined in the third support 135. That is, (1/2 * m) + 1 holes may be defined in the third support 135.

For example, if ten cells are supported by the first support 133, seven holes 131c, 131d, and 131e may be defined in the first support 133. Also, if twelve cells are supported by the third support 135, seven holes 131c, 131f, and 131g may be defined in the third support 135.

Here, the conductor 138e disposed in one hole 131d of the two holes 131d and 131e defined in the first support 133 may be connected to only one pole of the cell. Also, the conductor 138b disposed in the other hole 131e of the two holes 131d and 131e defined in the first support 133 may contact the conductor 138c disposed in one hole 131f of the two holes 131f and 131g of the third support 135.

Also, the conductor 138d disposed in the other hole 131g of the two holes 131f and 131g defined in the third support 135 may be connected to only one pole of the cell.

In Figs. 10 and 11, the first pole of each cell is expressed as a reference symbol CnA, and the second pole is expressed as a reference symbol CnB. Where, n is natural number.

Also, CnB is connected to C(n+1)A by the conductor 138. For example, the second pole C1B of the first cell is connected to the first pole C2A of the second cell by the conductor 138. However, each of the first pole C1A of the first cell and the second pole C22B of the last cell of the plurality of cells may be connected to one of the conductors 138a and 138d.

Thus, according to the current embodiment, since the poles different from each other of the two cells are connected to the conductor, and each of the conductors is connected to the BMS, the voltage of each of the plurality of cells may be managed.

Although the battery cover covers the battery unit in the foregoing embodiment, the preset disclosure is not limited thereto. For example, the battery cover may be omitted. In this case, the contact rib of the motor housing may contact the upper portion of the battery support. Also, the cover guide that is described in Fig. 5 may be disposed on the battery support.

For another example, the battery support may be integrated with the battery cover. In this case, the conductor is coupled to the battery support, and then the plurality of battery cells are inserted into the battery support to allow the conductor to contact the poles of the battery cells. However, a protrusion contacting the pole of the battery cell may be disposed on the conductor so that the conductor effectively contacts the battery cell.

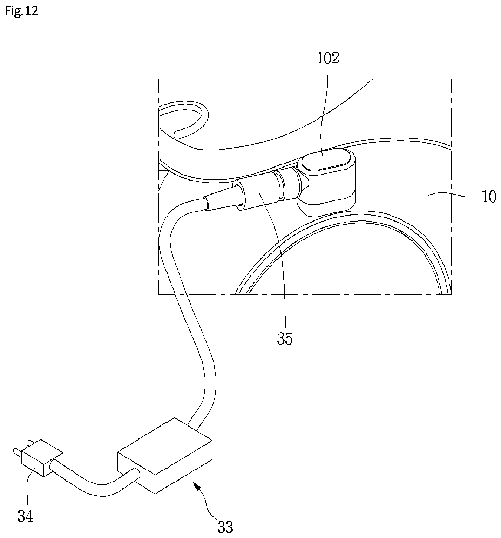

Fig. 12 is a view illustrating a state in which a charger is connected to a vacuum cleaner according to another embodiment.

The current embodiment may include the battery assembly according to the foregoing embodiment. Also, according to the current embodiment, a charger is independently provided and connected to a cleaner body. Thus, only characterized parts in the current embodiment will be described below.

Referring to Fig. 12, a cleaner connector 102 may be disposed on a cleaner body 10, and a charger 33 may be separably connected to the cleaner connector 102.

The charger 33 may include a plug connected to a socket and a charger connector 35 connected to the cleaner body 10. The cleaner connector 102 may protrude from the cleaner body 10. For another example, a suction part for suctioning air and dusts may include the cleaner connector 102. In this case, the cleaner connector may protrude from the suction part. For another example, a battery assembly may be disposed on the suction part.

The charger 33 may perform rectification smoothing operations to convert a commercial AC voltage into a DC voltage. Also, the charger 33 may output the converted DC voltage to the cleaner connector 102.

In the current embodiment, the cleaner body 10 or suction part may further include a boosting device for boosting the input voltage according to the voltage outputted form the charger 33.

Although embodiments have been described with reference to a number of illustrative embodiments thereof, it should be understood that numerous other modifications and embodiments can be devised by those skilled in the art that will fall within the scope of the appended claims. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A vacuum cleaner comprising:
a cleaner body (10) comprising a suction motor (160) for generating a suction force;
a suction part (21) arranged to communicate with the cleaner body (10) and receive air and dust; and
a battery assembly (120) arranged to supply power to the suction motor (160),
wherein the battery assembly (120) comprises:
a plurality of battery units (131, 132), wherein each battery unit comprises a plurality of battery cells; and
a plurality of support devices supporting the plurality of battery units, respectively,
wherein the plurality of battery cells are supported by the support device so that the battery cells are spaced apart from each other; wherein the plurality of support devices comprises a first support device for supporting a first battery unit (131) of the plurality of battery units and a second support device for supporting a second battery unit (132) of the plurality of battery units, the first support device including a first support (133) supporting one side of the plurality of cells of the first battery unit (131) and a second support (134) supporting the other side of the plurality of cells of the first battery unit (131).

2. The vacuum cleaner according to claim 1, wherein the plurality of battery cells are disposed in parallel by the support device and connected to each other in series.

3. The vacuum cleaner according to any preceding claim, wherein, a first pole of one cell is disposed opposite the corresponding pole of an adjacent cell.

4. The vacuum cleaner according to any preceding claim, wherein each of the supports (133, 134) comprises:
a support body (131a);
a plurality of cell cover (131b) extending from the support body (131a) to surround a portion of each of the plurality of battery cells.

5. The vacuum cleaner according to claim 4, wherein a plurality of conductors (138) are disposed on each of the supports (133, 134) to connect a first pole of one cell to a second pole of another cell.

6. The vacuum cleaner according to claim 5, further comprising a plurality of holes (131c, 131d, 131e, 131f, 131g) in the support body (131a) of each of the supports (133, 134) in which the plurality of conductors (138) are disposed.

7. The vacuum cleaner according to claim 5, further comprising a battery management system (139) arranged to manage the voltage of each of the plurality of battery cells connected to the plurality of conductors (138).

8. The vacuum cleaner according to claim 7, further comprising a battery cover (121, 122) covering the plurality of battery cells, the support device, and the battery management system (139),
wherein the battery management system (139) is disposed on the battery cover (121, 122).

9. The vacuum cleaner according to any preceding claim, wherein the plurality of battery cells are arranged in a "zigzag" shape.

## Patentansprüche

1. Staubsauger, der Folgendes umfasst:
einen Staubsaugerkörper (10), der einen Saugmotor (160) zum Erzeugen einer Saugkraft umfasst;
ein Saugbauteil (21), das ausgelegt ist, mit dem Staubsaugerkörper (10) zu kommunizieren und Luft und Staub aufzunehmen; und
eine Batterieanordnung (120), die ausgelegt ist, dem Saugmotor (160) Leistung zuzuführen,
wobei die Batterieanordnung (120) Folgendes umfasst:
mehrere Batterieeinheiten (131, 132), wobei jede Batterieeinheit mehrere Batteriezellen umfasst; und
mehrere Haltevorrichtungen, die jeweils die mehreren Batterieeinheiten halten,
wobei die mehreren Batteriezellen durch die Haltevorrichtung so gehalten werden, dass die Batteriezellen voneinander beabstandet sind, wobei die mehreren Haltevorrichtungen eine erste Haltevorrichtung zum Halten einer ersten Batterieeinheit (131) der mehreren Batterieeinheiten und eine zweite Haltevorrichtung zum Halten einer zweiten Batterieeinheit (132) der mehreren Batterieeinheiten umfassen, wobei die erste Haltevorrichtung eine erste Halterung (133), die eine Seite der mehreren Zellen der ersten Batterieeinheit (131) hält, und eine zweite Halterung (134), die die andere Seite der mehreren Batteriezellen der ersten Batterieeinheit (131) hält, aufweist.

2. Staubsauger nach Anspruch 1, wobei die mehreren Batteriezellen durch die Haltevorrichtung parallel angeordnet sind und miteinander in Reihe geschaltet sind.

3. Staubsauger nach einem der vorhergehenden Ansprüche, wobei ein erster Pol einer Zelle gegenüber dem entsprechenden Pol einer angrenzenden Zelle angeordnet ist.

4. Staubsauger nach einem der vorhergehenden Ansprüche, wobei jede der Halterungen (133, 134) Folgendes umfasst:
einen Halterungskörper (131a);
mehrere Zellenabdeckungen (131b), die sich von dem Halterungskörper (131a) erstrecken, um einen Abschnitt jeder der mehreren Batteriezellen zu umgeben.

5. Staubsauger nach Anspruch 4, wobei mehrere Leiter (138) an jeder der Halterungen (133, 134) angeordnet sind, um einen ersten Pol einer Zelle mit einem zweiten Pol einer weiteren Zelle zu verbinden.

6. Staubsauger nach Anspruch 5, der ferner mehrere Löcher (131c, 131d, 131e, 131f, 131g) in dem Halterungskörper (131a) jeder der Halterungen (133, 134) umfasst, in denen die mehreren Leiter (138) angeordnet sind.

7. Staubsauger nach Anspruch 5, der ferner ein Batteriemanagementsystem (139) umfasst, das ausgelegt ist, die Spannung jeder der mehreren Batteriezellen, die mit dem mehreren Leitern (138) verbunden sind, zu regeln.

8. Staubsauger nach Anspruch 7, der ferner eine Batterieabdeckung (121, 122) umfasst, die die mehreren Batteriezellen, die Haltevorrichtung und das Batteriemanagementsystem (139) bedeckt,
wobei das Batteriemanagementsystem (139) an der Batterieabdeckung (121, 122) angeordnet ist.

9. Staubsauger nach einem der vorhergehenden Ansprüche, wobei die mehreren Batteriezellen in einer "Zickzack"-Form angeordnet sind.

## Revendications

1. Aspirateur comprenant :
un corps d'aspirateur (10) comprenant un moteur d'aspiration (160) pour générer une force d'aspiration ;
une pièce d'aspiration (21) agencée pour communiquer avec le corps d'aspirateur (10) et recevoir de l'air et des poussières ; et
un ensemble batterie (120) agencé pour fournir une puissance au moteur d'aspiration (160),
dans lequel l'ensemble batterie (120) comprend :
une pluralité d'unités de batteries (131, 132), chaque unité de batterie comprenant une pluralité d'éléments de batterie ; et
une pluralité de dispositifs de support qui supportent la pluralité d'unités de batteries, respectivement,
dans lequel la pluralité d'éléments de batterie sont supportés par le dispositif de support de telle sorte que les éléments de batterie soient espacés les uns des autres ; dans lequel la pluralité de dispositifs de support comprend un premier dispositif de support pour le support d'une première unité de batterie (131) de la pluralité d'unités de batteries et un deuxième dispositif de support pour le support d'une deuxième unité de batterie (132) de la pluralité d'unités de batterie, le premier dispositif de support comprenant un premier support (133) supportant un côté de la pluralité d'éléments de la première unité de batterie (131) et un deuxième support (134) supportant l'autre côté de la pluralité d'éléments de la première unité de batterie (131).

2. Aspirateur selon la revendication 1, dans lequel la pluralité d'éléments de batterie sont disposés en parallèle par le dispositif de support et connectés les uns aux autres en série.

3. Aspirateur selon l'une quelconque des revendications précédentes, dans lequel un premier pôle d'un élément est disposé en face du pôle correspondant d'un élément adjacent.

4. Aspirateur selon une quelconque revendication précédente, dans lequel chacun des supports (133, 134) comprend :
un corps de support (131a) ;
une pluralité de couvercles d'éléments (131b) s'étendant depuis le corps de support (131a) pour entourer une partie de chacun de la pluralité d'éléments de batterie.

5. Aspirateur selon la revendication 4, dans lequel une pluralité de conducteurs (138) sont disposés sur chacun des supports (133, 134) pour connecter un premier pôle d'un élément à un second pôle d'un autre élément.

6. Aspirateur selon la revendication 5, comprenant en outre une pluralité de trous (131c, 131d, 131e, 131f, 131g) dans le corps de support (131a) de chacun des supports (133, 134) dans lequel sont disposés la pluralité de conducteurs (138).

7. Aspirateur selon la revendication 5, comprenant en outre un système de gestion de batterie (139) agencé pour gérer la tension de chacun de la pluralité d'éléments de batterie connectés à la pluralité de conducteurs (138).

8. Aspirateur selon la revendication 7, comprenant en outre un couvercle de batterie (121, 122) couvrant la pluralité d'éléments de batterie, le dispositif de support, et le système de gestion de batterie (139) ,
dans lequel le système de gestion de batterie (139) est disposé sur le couvercle de batterie (121, 122).

9. Aspirateur selon une quelconque revendication précédente, dans lequel la pluralité d'éléments de batterie sont agencés en forme de « zigzag ».
